(19) Europäisches Patentamt
European Patent Office
Office européen des brevets

(11) **EP 1 790 479 B1**

(12) **EUROPEAN PATENT SPECIFICATION**

(45) Date of publication and mention
of the grant of the patent:
**16.09.2009 Bulletin 2009/38**

(51) Int Cl.:
***B41J 2/165*** *(2006.01)* ***H04N 1/41*** *(2006.01)*

(21) Application number: **06123146.0**

(22) Date of filing: **30.10.2006**

(54) **Inkjet image forming method and apparatus**

Tintenstrahlbilderzeugungsverfahren und -gerät

Méthode et appareil de formation d'images à jet d'encre

(84) Designated Contracting States:
**DE FR GB NL**

(30) Priority: **23.11.2005 KR 20050112198**

(43) Date of publication of application:
**30.05.2007 Bulletin 2007/22**

(73) Proprietor: **SAMSUNG ELECTRONICS CO., LTD.**
**Suwon-si,**
**Gyeonggi-do (KR)**

(72) Inventors:
• **Vladislav, Terekhov**
**Yeongtong-gu**
**Suwon-si**
**Gyeonggi-do (KR)**

• **Kang, Ki-min**
**506-204 Hansolmaeul Jugong 5-danji Ap**
**Gyeonggi-do (KR)**

(74) Representative: **Clark, Charles Robert**
**Venner Shipley LLP**
**20 Little Britain**
**London EC1A 7DH (GB)**

(56) References cited:
**EP-A- 1 384 592      EP-A- 1 536 370**
**US-A- 5 581 284      US-A1- 2003 123 093**
**US-B1- 6 508 531**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an inkjet image forming method and apparatus. More particularly, although not exclusively, the present invention relates to a method and apparatus for an inkjet image forming apparatus (such as an inkjet printer). The method and apparatus can compensate for image degradation caused by one or more malfunctioning nozzles.

An inkjet image forming apparatus forms images by ejecting ink from a printhead. The printhead is placed a predetermined distance apart from a print medium and reciprocally moves in a direction perpendicular to a transferring direction of the print medium. Such an inkjet image forming apparatus is referred to as a shuttle type inkjet image forming apparatus. A nozzle unit having a plurality of nozzles for ejecting ink is installed in a printhead of the shuttle-type inkjet image forming apparatus.

Recently, a printhead having a nozzle unit with a length corresponding to the width of a print medium has been used to obtain high-speed printing. An image forming apparatus operated in this manner is referred to as a line printing type inkjet image forming apparatus. In the line printing type inkjet image forming apparatus, a printhead is fixed and only a print medium is transferred. Accordingly, a driving device of an inkjet image forming apparatus is simple and high-speed printing can be performed.

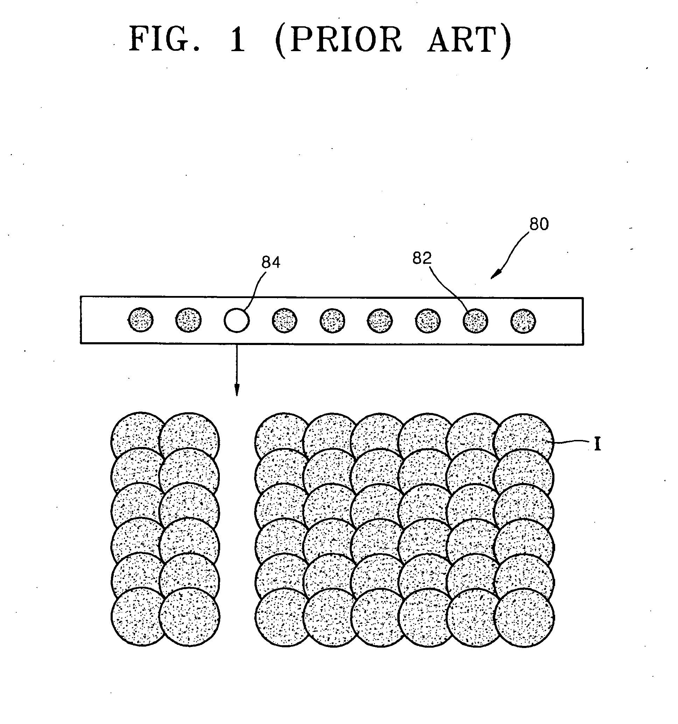

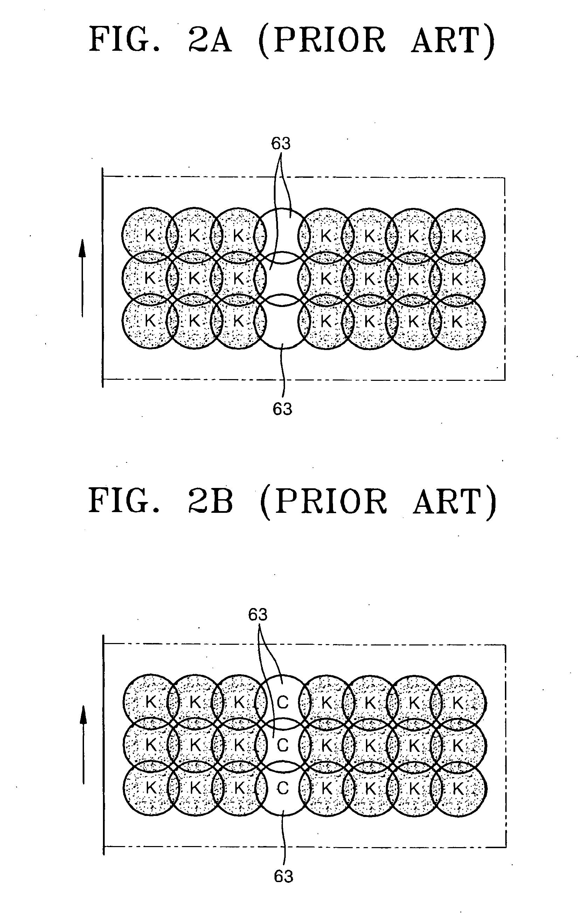

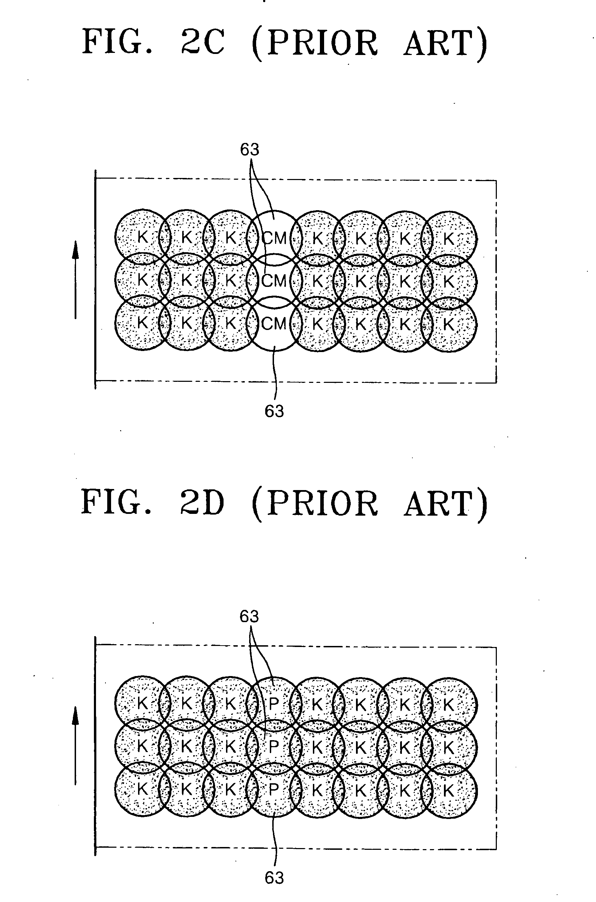

Figure 1 shows a printed pattern obtained when a nozzle of a conventional inkjet image forming apparatus malfunctions. Figures 2A through 2D are pixel images for explaining a known method of compensating for a malfunctioning nozzle of the conventional inkjet image forming apparatus.

Referring to Figure 1, the inkjet image forming apparatus forms an image by ejecting ink I from nozzles 82 formed in a nozzle unit 80 onto a print medium. When a nozzle 84 malfunctions, the malfunctioning nozzle 84 irregularly ejects ink I so that a missing line appears on the print medium, as illustrated in Figure 1. That is, when a malfunctioning nozzle 84 exists among a plurality of nozzles 82, a missing line (such as a visible white line) will appear on the print medium because the malfunctioning nozzle irregularly ejects ink. Thus, the printing quality is degraded by the presence of the missing line.

A method of compensating for the image quality degradation due to a malfunctioning nozzle is disclosed in U.S. Patent No. 5,581,284. The malfunctioning nozzle may be a bad or non-droplet ejecting nozzle; for instance, the nozzle might be blocked by a foreign object thereby preventing ink from being ejected with the usual amount or altogether. With reference to figures 2A through 2D, when a malfunctioning nozzle 63 for ejecting black ink is identified, ink droplets of other colors, for example, cyan, magenta, and yellow, are sequentially ejected to a region to which the malfunctioning nozzle should have ejected black ink. As described above, the black color can be represented by printing the cyan, magenta, and yellow ink droplets on the same location of the print medium, and the represented black is called process black or composite black. However, while this method might be useful to compensate for malfunction of a nozzle ejecting black ink, it is not useful to compensate for a malfunction nozzle ejecting other colors. Further, if one of the nozzles used for compensation malfunctions, other colors such as red (yellow + magenta), green (cyan + yellow), or blue (cyan + magenta) color are printed in place of black, and thus printing quality is further deteriorated.

EP1384592 A1 discloses an inkjet printing method and inkjet printing apparatus with defective nozzle compensation. Here, the printing data from a pixel, which is to be formed by a nozzle determined to be detective, is added to the printing data corresponding to neighbouring nozzles.

Hence, there is a need for an improved method and apparatus of compensating for malfunctioning nozzles to improve the image quality.

Accordingly, an aspect of the present invention provides a method and apparatus for compensating for a malfunctioning nozzle that can effectively compensate for image degradation caused by malfunctioning nozzles in order to enhance printing quality.

According to the present invention, there is provided a method according to claim 1, and an apparatus according to claim 10.

According to an exemplary aspect of the present invention, there is provided a method of compensating for a malfunctioning nozzle in an inkjet image forming apparatus including detecting a malfunctioning nozzle among nozzles installed in the inkjet image forming apparatus and increasing a dithering threshold of an adjacent position to a compensation position printed by the detected malfunctioning nozzle.

In the increasing of the dithering threshold, the dithering threshold of the compensation position may be changed with the dithering threshold of the adjacent print position.

The increasing of the dithering threshold may include selecting a normal operating nozzle among nozzles adjacent to the malfunctioning nozzle and increasing a dithering threshold of a print position printed by the selected normal operating nozzle and adjacent to the compensation position.

According to another exemplary aspect of the present invention, there is provided a method of compensating for a malfunctioning nozzle in an inkjet image forming apparatus including increasing a first color dithering threshold of an adjacent position to a compensation position printed by the detected malfunctioning nozzle and increasing a second color dithering threshold of the compensation position.

The first color may be printed by the malfunctioning nozzle and the second color may be different from the first color.

In the increasing of the second color dithering threshold, when a second color dithering threshold of an adjacent print position to the compensation position is greater than a second color dithering threshold of the compensation position, the second color dithering threshold of the compensation position may be changed with the second color dithering threshold of the adjacent print position.

According to another exemplary aspect of the present invention, there is provided a malfunctioning nozzle compensating apparatus in an inkjet image forming apparatus, the apparatus including a malfunctioning nozzle detecting unit detecting a malfunctioning nozzle among nozzle installed in the inkjet image forming apparatus and a threshold adjusting unit increasing a dithering threshold of an adjacent position to a compensation position printed by the detected malfunctioning nozzle.

The threshold adjusting unit may change the dithering threshold of the compensation position with the dithering threshold of the adjacent print position.

The apparatus may further include a threshold comparing unit comparing a second color dithering threshold of the compensation position with a second color dithering threshold of the adjacent print position, wherein when the second color dithering threshold of the adjacent print position is greater than the second color dithering threshold of the compensation position, the second color dithering threshold of the adjacent print position is changed with the second color dithering threshold of the compensation position, wherein the second color is printed by a normal operating nozzle disposed at the same position as the malfunctioning nozzle.

According to another exemplary aspect of the present invention, there is provided a method of compensating for a malfunctioning nozzle in an inkjet image forming apparatus, the method comprising: detecting a malfunctioning nozzle among nozzles installed in an inkjet image forming apparatus; determining a compensation print position associated with the malfunctioning nozzle; determining a print position adjacent to the compensation print position; and increasing a dithering threshold of the adjacent print position.

According to another exemplary aspect of the present invention, there is provided a method of compensating for a malfunctioning nozzle in an inkjet image forming apparatus, the method comprising: detecting a malfunctioning nozzle among nozzles installed in an inkjet image forming apparatus; determining a compensation print position associated with the malfunctioning nozzle; determining a print position adjacent to the compensation print position; increasing a first color dithering threshold of the adjacent print position; and increasing a second color dithering threshold of the compensation print position.

The exemplary method of compensating for a malfunctioning nozzle may be embodied as computer programs recorded on a computer readable recording medium.

According to another exemplary aspect of the present invention, there is provided a computer-readable recording medium having recorded thereon instructions for implementing a method of compensating for a malfunctioning nozzle in an inkjet image forming apparatus, the medium comprising: a first set of instructions for detecting a malfunctioning nozzle among nozzles installed in an inkjet image forming apparatus; and a second set of instructions for increasing a dithering threshold of a print position adjacent to a compensation position of the detected malfunctioning nozzle.

According to another exemplary aspect of the present invention, there is provided a computer-readable recording medium having recorded instructions for implementing a method of compensating for a malfunctioning nozzle in an inkjet image forming apparatus, the medium comprising: a first set of instructions for increasing a first color dithering threshold of an adjacent print position to a compensation position of a detected malfunctioning nozzle; and a second set of instructions for increasing a second color dithering threshold of the compensation position.

Embodiments of the present invention are now described by way of example and with reference to the attached drawings, in which:

Figure 1 shows printing patterns when a nozzle unit of a conventional line printing type inkjet image forming apparatus malfunctions;

Figures 2A through 2D are pixel images for explaining a known method of compensating for a malfunctioning nozzle unit of the conventional inkjet image forming apparatus;

Figure 3 is a schematic cross-sectional view of an inkjet image forming apparatus according to an exemplary embodiment of the present invention;

Figure 4 illustrates a structure of a nozzle driving unit that drives a plurality of nozzles in a printhead according to an exemplary embodiment of the present invention;

Figure 5 is a block diagram illustrating a malfunctioning nozzle compensating apparatus in an inkjet image forming apparatus, according to an exemplary embodiment of the present invention;

Figure 6 illustrates dithering thresholds mapped on a compensation position, which is a print position of a malfunctioning nozzle, and adjacent print positions, according to an exemplary embodiment of the present invention;

Figure 7 illustrates dithering thresholds when a threshold adjusting unit of Figure 5 increases a dithering threshold of an adjacent print position, according to an exemplary embodiment of the present invention;

Figure 8 illustrates dithering thresholds when the threshold adjusting unit of Figure 5 changes a dithering threshold of an compensation position for a dithering threshold of an adjacent print position, according to another exemplary embodiment of the present invention;

Figure 9 is a block diagram illustrating a configuration of the threshold adjusting unit of Figure 5 according to an exemplary embodiment of the present invention;

Figures 10A through 10C illustrate a method of adjusting dithering thresholds of two colors by the threshold adjusting unit of Figure 9, according to an exemplary embodiment of the present invention;

Figure 11 is a flow chart of a method of compensating for a malfunctioning nozzle according to an exemplary embodiment of the present invention; and

Figure 12 is a flow chart of a method of compensating for a malfunctioning nozzle according to another exemplary embodiment of the present invention.

Throughout the drawings, the same drawing reference numerals will be understood to refer to the same elements, features, and structures.

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope of the invention. Also, descriptions of well-known functions and constructions are omitted for clarity and conciseness.

An exemplary method and apparatus for compensating for a malfunctioning nozzle and an inkjet image forming apparatus using the same will now be described more fully with reference to the accompanying drawings, in which exemplary embodiments of the invention are shown. For convenience of explanation, the entire exemplary structure of the inkjet image forming apparatus and a half-toning transaction using dithering will be described first, and then the exemplary method and apparatus for compensating for the malfunctioning nozzle will be described. In the drawings, the thicknesses of lines and sizes are exaggerated for clarity and convenience. Also, the terms used herein are defined according to the functions of the present invention. Thus, the terms may vary depending on users or operators and usages. That is, the terms used herein must be understood based on the descriptions made herein.

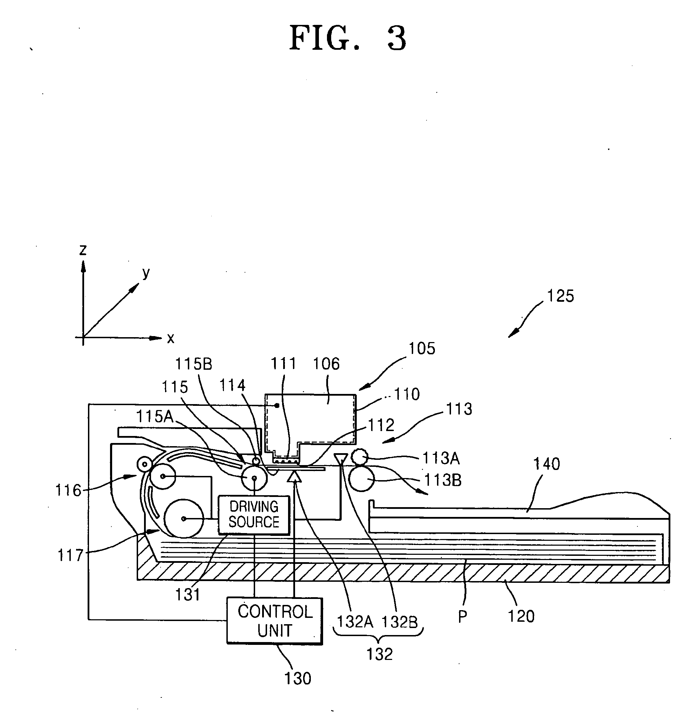

Figure 3 is a schematic cross-sectional view of an inkjet image forming apparatus according to an exemplary embodiment of the present invention.

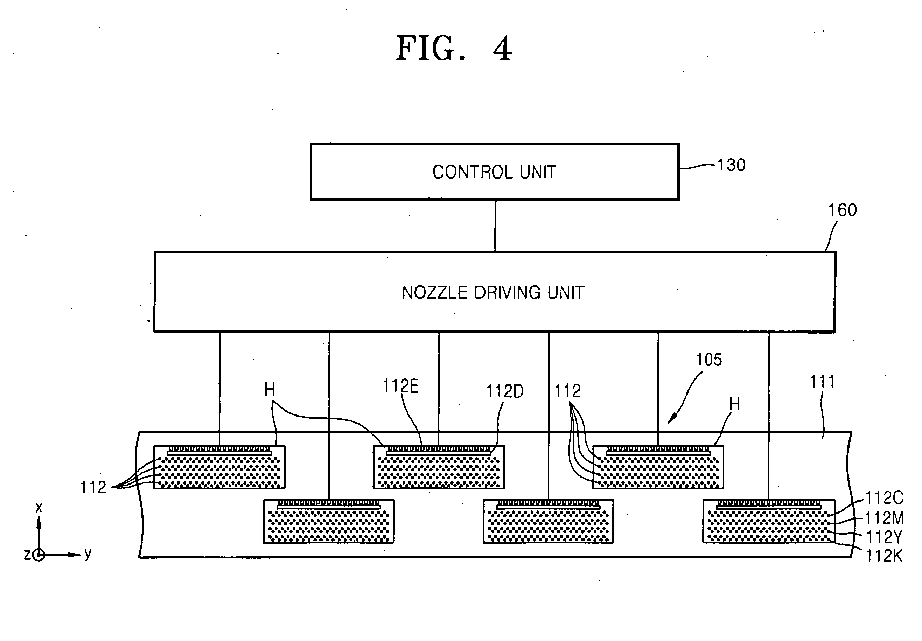

Referring to Figure 3, the inkjet image forming apparatus 125 includes a feeding cassette 120, a printhead unit 105, a supporting member 114 opposite to the printhead unit 105, a malfunctioning nozzle detecting unit 132 for detecting the generation and position of a malfunctioning nozzle, a print medium transferring unit for transferring a print medium P in a first direction, in other words, an x direction, and a stacking unit 140 on which the discharged print medium P is stacked. In addition, the inkjet image forming apparatus 125 further includes a nozzle driving unit 160 (see Figure 4) and a control unit 130 for controlling each component thereof.

The print medium P is stacked on the feeding cassette 120. The print medium P is transferred from the feeding cassette 120 through a printhead 111 to the stacking unit 140 by the print medium transferring unit. The stacking unit 140 is, for example, a discharging paper tray, where the print medium P on which an image is formed is stacked after discharging.

The print medium transferring unit transfers the print medium P along a path, and includes a pick-up roller 117, an auxiliary roller 116, a feeding roller 115, and a discharging roller 113. The print medium transferring unit is driven by a driving source 131, such as a motor, and provides a transferring force to transfer the print medium P. The driving source 131 is controlled by the control unit 130.

The pick-up roller 117 is installed on one side of the feeding cassette 120 and picks up the print medium P stacked in the feeding cassette 120. The feeding roller 115 is installed at an inlet side of the printhead 111 and feeds the print medium P drawn out by the pick-up roller 117 to the printhead 111. The feeding roller 115 includes a driving roller 115A to supply a transferring force to transfer the print medium P, and an idle roller 115B elastically or resiliently engaged with the driving roller 115A. The auxiliary roller 116 that transfers the print medium P may be further installed between the pick-up roller 117 and the feeding roller 115. The discharging roller 113 is installed at an outlet side of the printhead 111 and discharges the print medium P on which the printing has been completed, to an outside of the image forming apparatus 125. The discharging roller 113 includes a star wheel 113A installed in a width direction of the print medium P, and a supporting roller 113B which is opposite to the star wheel 113A and supports a rear side of the print medium P. The star wheel 113A may prevent the print medium P, fed in a downward direction of a nozzle unit 112, from contacting the bottom surface or underside of the nozzle unit 112 or a body 110, and may prevent the distance between the print medium P and the bottom surface of the nozzle unit 112 or the body 110 from being changed. The star wheel 113A is installed such that at least a portion of the star wheel 113A protrudes below the nozzle unit 112, and contacts at a point of a top surface of the print medium P. In other words, a function of the star wheel is to try to keep a constant distance, during use, between the print medium and the nozzle unit. The discharged print medium P is stacked on the stacking unit 140.

The supporting member 114 is installed below the printhead 111 and supports the rear side of the print medium P to maintain a distance between the nozzle unit 112 and the print medium P. The distance between the nozzle unit 112 and the print medium P may be about 0.5 - 2.5 mm.

The malfunctioning nozzle detecting unit 132 detects a malfunctioning nozzle generated in a manufacturing process or occurring during printing. In addition, the malfunctioning nozzle detecting unit 132 inspects ejecting operations of nozzles adjacent to the malfunctioning nozzle. That is, the malfunctioning nozzle detecting unit 132 inspects each nozzle in the nozzle unit 112, and a memory (not illustrated) stores the information about the ejecting operations of the nozzle. The malfunctioning nozzle indicates a bad or non-droplet ejecting nozzle. The malfunctioning nozzle may exist when ink is not ejected from a nozzle due to one or several causes, or when an ink droplet comprising a smaller than usual amount of ink is ejected from a nozzle.

The malfunctioning nozzle may be generated in a process of manufacturing the printhead 111 or may occur during printing. In general, the information of the malfunctioning nozzle generated in the manufacturing process is stored in a memory (not illustrated) installed in the printhead 111 and may be transmitted to the image forming apparatus 125 when the printhead is mounted in the image forming apparatus 125.

In general, printheads of inkjet image forming apparatuses are classified into two types according to an actuator that provides an ejecting force to ink droplets. The first type is a thermal driving printhead that generates bubbles in ink using a heater, thereby ejecting ink droplets due to an expanding force of the bubbles. The second type is a piezoelectric driving printhead that ejects ink droplets using a pressure applied to ink due to deformation of a piezoelectric device. A malfunctioning ink ejection mechanism can be detected thereby indicating a malfunctioning or defective nozzle associated with the mechanism. For instance, when ink is ejected using thermal driving, a defective nozzle can be detected when the defect is caused by a heating element used for ejecting ink becoming disconnected or a driving circuit of the heater being broken. Similarly, a malfunctioning nozzle caused by a damaged electrical element (such as a field effect transistor FET, or the like) can also be detected. Likewise, when ink is ejected using piezoelectric driving, a defective piezoelectric device or malfunctioning nozzle can be detected when the malfunction or defect is caused by a damaged driving circuit for driving the piezoelectric device.

However, the causes of a malfunctioning nozzle may not be easily detected when the nozzle is clogged with foreign objects. Typically, when the cause of a malfunctioning nozzle cannot be easily detected, test page printing is performed. If a malfunctioning nozzle exists in the nozzle unit 112, the print concentration (or ink density) on a portion of a print medium P printed by the malfunctioning nozzle is lower than on a portion of the print medium P printed by a normally operating nozzle. Accordingly, the generation and position of a malfunctioning nozzle can be detected by determining a print concentration difference.

The malfunctioning nozzle detecting unit 132 includes a first detecting unit 132A and a second detecting unit 132B. In an exemplary embodiment, the first detecting unit 132A detects whether or not one or more nozzles are clogged by radiating or shining light directly onto the nozzle unit 112, and the second detecting unit 132B detects whether or not a malfunctioning nozzle exists in the nozzle unit 112 by radiating or shining light onto the print medium P. This can be carried out when the print medium P is transferred. The malfunctioning nozzle detecting unit 132 includes an optical sensor. The optical sensor includes a light-emitting sensor such as a light emitting diode that radiates light onto the nozzle unit 112 or the print medium P and a light-receiving sensor that receives light reflected from the nozzle unit 112 or the print medium P. An output signal from the light-receiving sensor is input to the second detecting unit 132B. The malfunctioning nozzle detecting unit 132 detects whether or not a malfunctioning nozzle exists in the nozzle unit 112 in response to the output signal transmitted from the light-receiving sensor, and information about whether or not the malfunctioning nozzle exists in the nozzle unit 112 is transmitted to the control unit 130. The light emitting sensor and the light receiving sensor can be formed as an integrated type or several separate units.

The structures and functions of the optical sensor are well known to those of ordinary skill in the art, and thus a detailed description thereof will be omitted.

The malfunctioning nozzle detecting unit 132 can respectively transmit nozzle inspection signals to the nozzle and detects the occurrence and position of a malfunctioning nozzle in response to the transmitted nozzle inspection signals, according to an exemplary embodiment of the present invention.

The malfunctioning nozzle detecting unit 132 detects the generation and position of the malfunctioning nozzle in the nozzle unit 112 using the above-described series of processes. Information of the malfunctioning nozzle detected by the malfunctioning nozzle detecting unit 132 can be stored in a memory (not illustrated). The control unit 130 controls the operation of each component of the image forming apparatus 125 to compensate for the malfunctioning nozzle according to the information of the malfunctioning nozzle stored in the memory (not illustrated). The information of the malfunctioning nozzle can include the position of a malfunctioning nozzle or an ink color ejected from the malfunctioning nozzle.

The printhead unit 105 prints an image by ejecting ink onto the print medium P, and includes a body 110, the printhead 111 installed on one side of the body 110, the nozzle unit 112 formed on the printhead 111, and a carriage 106 where the body 110 is mounted. The body 110 may be mounted into the carriage 106 in a cartridge type manner. The feeding roller 115 is rotatably installed at an inlet side of the nozzle unit 112, and the discharging roller 113 is rotatably installed at an outlet side of the nozzle unit 112.

Although not illustrated, an ink container storing ink is provided in the body 110. Further, the body 110 may include chambers, each of which has a nozzle driving unit (for example, piezoelectric elements or heat-driving typed heaters), that are connected to respective nozzles of the nozzle units 112 and provides means to apply pressure for ejecting the ink, a passage (for example, an orifice) for supplying the ink contained in the body 110 to each chamber, a manifold that is a common passage for supplying the ink flowed through the passage to the chamber, and a restrictor that is an individual passage for supplying the ink from the manifold to each chamber. The chamber, the ejecting unit, the passage, the manifold, and the restrictor are well-known to a person skilled in the art, and thus detailed descriptions thereof will be omitted. In addition, the ink container (not illustrated) may be separately installed from the printhead unit 105. The ink stored in the ink container (not illustrated) may be supplied to the printhead unit 105 through a supplying unit such as a hose.

Figure 4 illustrates a structure of a nozzle driving unit that drives a plurality of nozzles in a printhead, according to an exemplary embodiment of the present invention. Referring to Figure 4, a method of driving the printhead will be described.

The nozzle driving unit 160 provides an ejecting force to ink droplets, and drives the printhead 111 with a frequency to print an image on the print medium P. Nozzle driving units 160 are classified into two types according to an actuator that provides an ejecting force to ink droplets. The first type is a thermal driving printhead that ejects ink droplets using a heater. The second type is a piezoelectric driving printhead that ejects ink droplets using a piezoelectric device. The nozzle driving unit 160 driving the nozzles in the nozzle unit 112 is controlled by the control unit 130.

In general, the printheads 111 are classified into two types: a shuttle type and a line printing type. A shuttle type inkjet image forming apparatus prints an image using the printhead 111 which moves reciprocally in a direction perpendicular to a transferring direction of the print medium P. A line printing type inkjet image forming apparatus typically has a printhead 111 with a length corresponding to the width of a print medium P. The present invention can be applied to a shuttle type inkjet image forming apparatus or a line printing type inkjet image forming apparatus as well as to apparatuses employing other types of printheads. As an exemplary embodiment, a printhead in a line printing type inkjet image forming apparatus will be described.

The printhead 111 is installed along a second direction, in other words, the y direction, with respect to the print medium P which transfers along a first direction, in other words, the x direction. The printhead 111 uses heat energy or a piezoelectric device as an ink ejecting source, and is made to have a high resolution. The printhead may be fabricated using a semiconductor manufacturing process such as etching, deposition, sputtering and the like. The printhead unit 111 includes a nozzle unit 112 which prints an image by ejecting ink onto the print medium P.

The nozzle unit 112 may have a length equal to or longer than a width of the print medium P. Referring to Figure 4, a plurality of head chips H having a plurality of nozzle row arrays 112C, 112M, 112Y, and 112K may be formed in the printhead 111. The reference numeral 112C denotes a cyan nozzle array, the reference numeral 112M denotes a magenta nozzle array, the reference numeral 112Y denotes a yellow nozzle array, and the reference numeral 112K denotes a black nozzle array. Each of the head chips H may be formed of one chip having a length equal to that of the printhead 111, in other words, a width of the print medium P.

In an exemplary embodiment, a line printing type printhead 111 including a nozzle unit 112 having a plurality of head chips H is described, but the present invention can be applied to variously formed printheads. For example, an inkjet image forming apparatus may include a shuttle type printhead or other types of printheads. Therefore, the printhead 111 and the nozzle unit 112 illustrated in Figures 4 do not limit the technical scope of the prevent invention.

Each of the nozzles in the nozzle unit 112 includes a driving circuit 112D and a cable 112E to receive printing data, electric power, control signals, and the like. The cable 112E may be a flexible printed circuit (FPC) or a flexible flat cable (FFC).

In the inkjet image forming apparatus 125, image data of each pixel is generally binarized using a halftoning transaction such that the control unit 130 generates a driving signal for determining respective ink ejection of the plurality of nozzles.

The halftoning transaction is used as an image processing method employed in an apparatus treating restricted tone values, and reduces a quantized tone per pixel, but prints an image similar to an original image. The halftoning transaction is used in image printing apparatuses such as cylinder printing presses, image forming apparatuses, or liquid crystal displays. For example, the halftoning transaction can convert 8-bit image data (0 through 255) to 1-bit binary data (0 or 1). A dithering method is one of the halftoning transactions.

Hereinafter, the dithering method will be described for the case where a continuous-tone image representing cyan (C), magenta (M), yellow (Y), and black (K) color image data, which have values between 0 to 255, is dithered to be binarized.

A dither matrix having a plurality of dithering thresholds is mapped on the continuous-tone image. The dither matrix may be a scroll matrix, a spiral matrix, a dotted matrix, a blue noise matrix, or the like. In addition, the size of the dither matrix may vary, for example, 4x4, 8x8, 16x16, or 32x32 pixel size. The dither matrixes for cyan (C), magenta (M), yellow (Y), and black (K) colors exist. All or some matrices may be identical or all matrices may be different from each other.

When the size of a space, which the dither matrix occupies, is smaller than the size of an image to be printed, the dither matrix is reproduced to fit the size of the image such that the dithering can be performed regardless of the size of the image.

For each pixel in which the dither matrix is mapped, image data ranging from 0 to 255 is compared with a mapped dithering threshold. When the image data of a pixel is smaller than the dithering threshold, an ink dot is printed on the position of the pixel. When the image data of a pixel is greater than the dithering threshold, the image data is binarized to 0 or 1 in order not to print an ink dot on the position of the pixel. Accordingly, as the dithering threshold to be mapped increases, the possibility that the image date of the position is smaller than the dithering threshold is relatively high, and thus the possibility that ink is ejected on the position is high.

When the dithering is performed with respect to cyan (C), magenta (M), yellow (Y), and black (K), data having information about the ejection of these four color inks is generated.

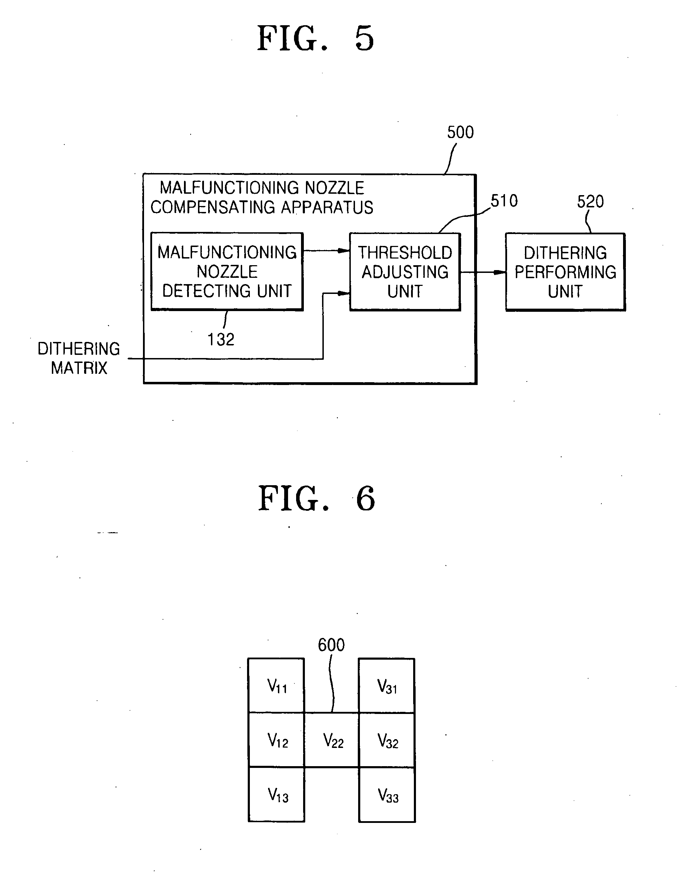

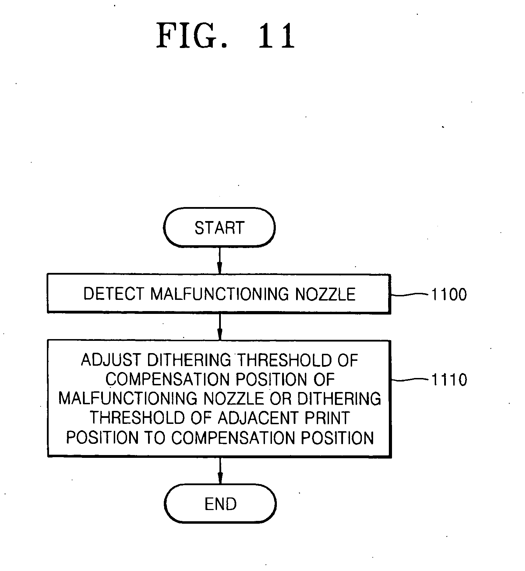

Figure 5 is a block diagram illustrating a malfunctioning nozzle compensating apparatus 500 in an inkjet image forming apparatus, according to an exemplary embodiment of the present invention. The malfunctioning nozzle compensating apparatus 500 includes the malfunctioning nozzle detecting unit 132 and a threshold adjusting unit 510. The operation of the malfunctioning nozzle compensating apparatus 500 will be described in conjunction with a flowchart of a method of compensating for a manufacturing nozzle illustrated in Figure 11.

The malfunctioning nozzle detecting unit 132 inspects ejection states of nozzles in the nozzle unit 112 installed in the image forming apparatus 125, detects a malfunctioning nozzle, and generates and outputs information of the detected malfunctioning nozzle in operation 1100. The methods of detecting a malfunctioning nozzle and generating information of the malfunctioning nozzle by the malfunctioning nozzle detecting unit 132 have been described with reference to Figure 3.

The threshold adjusting unit 510 receives the dither matrix having the information of the malfunctioning nozzle and the dithering thresholds to be mapped at the print position of an image to be printed. The threshold adjusting unit 510 adjusts a dithering threshold to be mapped at a compensation position or adjacent position to the compensation position in the dithering matrix in operation 1110. If the detected malfunctioning nozzle can eject some ink, the malfunctioning nozzle ejects ink onto a position of a print medium P. The compensation position denotes this position; the compensation position is a position where compensation is required in order to compensate for a defective/malfunctioning nozzle. In operation 1110, as the dithering threshold increases, the possibility that ink is ejected onto the mapped print position becomes relatively high, but as the dithering threshold decreases, the possibility that ink is ejected onto the mapped print position becomes relatively low.

Figure 6 illustrates dithering thresholds mapped on a compensation position 600, which is a print position of a malfunctioning nozzle, and adjacent print positions, according to an exemplary embodiment of the present invention. Referring to Figure 6, adjacent print positions above and below the compensation position 600 are positions that are also printed by the malfunctioning nozzle, and thus the adjacent print position may be selected from the other six adjacent positions for adjusting the dithering threshold, according to an exemplary embodiment of the present invention.

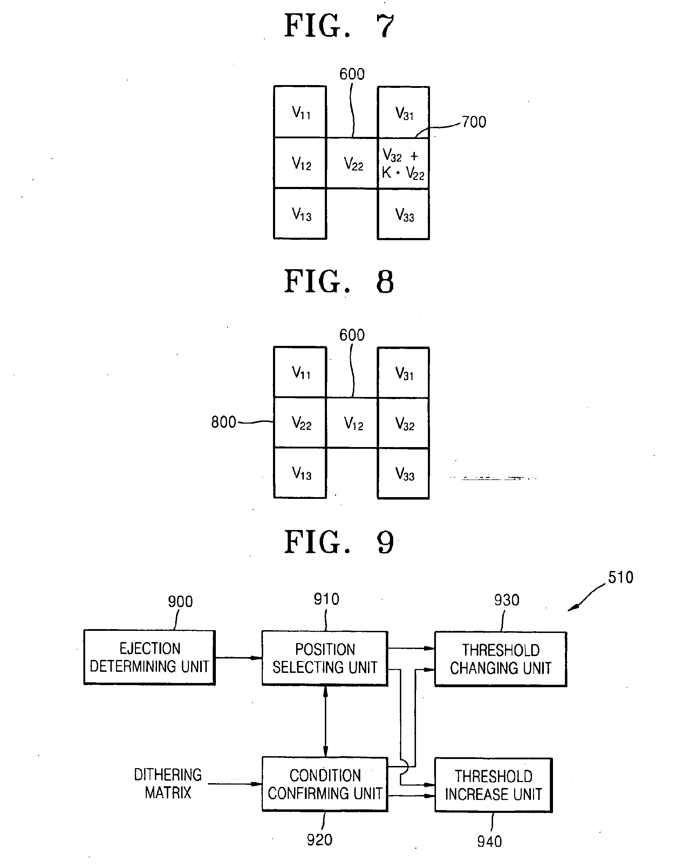

Figure 7 illustrates dithering thresholds when the threshold adjusting unit 510 increases a dithering threshold of print position 700 adjacent to the compensation position 600. Referring to Figure 7, the threshold adjusting unit 510 increases the dithering threshold of the adjacent print position 700 to adjust the dithering threshold. As described above, the threshold adjusting unit 510 increases the dithering threshold of the adjacent print position 700 from V32 to V32+ k•V22, so that the possibility that ink is ejected to print an ink dot on the adjacent print position 700 increases. Accordingly, although an ink dot is not printed on the compensation position 600 due to the malfunctioning nozzle, an ink dot is printed on the adjacent print position 700, thereby reducing the degradation of print quality.

Threshold adjusting unit 510 increases the dithering threshold of the adjacent print position 700 using equation 1.

$$V'_{adjacent} = V_{adjacent} + (k \times V_{defect}) \qquad \dots\dots (1)$$

where $V_{adjacent}$ is a dithering threshold of the adjacent print position 700, $V_{defect}$ is a dithering threshold of the compensation position 600, V' adjacent is an increased dithering threshold of the adjacent print position 700, and k is a constant.

Figure 8 illustrates dithering thresholds when the threshold adjusting unit 510 changes a dithering threshold of the compensation position 600 for a dithering threshold of an adjacent print position 800, according to another exemplary embodiment of the present invention. Referring to Figure 8, the threshold adjusting unit 510 changes the dithering threshold of the compensation position 600 with a dithering threshold of the adjacent print position 800 to adjust the dithering threshold. When the dithering threshold of the compensation position 600 is greater than the dithering threshold of the adjacent print position 800, the threshold adjusting unit 510 changes the dithering threshold of the compensation position 600 for the dithering threshold of the adjacent print position 800, and thus the possibility that ink is ejected to print an ink dot on the adjacent print position 800 increases. Accordingly, the ink dot is printed on the adjacent print position 800, thereby preventing the degradation of print quality. This exemplary change method should be performed if the dithering threshold of the compensation position 600 is greater than the dithering threshold of the adjacent print position 800. When the dithering threshold of the compensation position 600 is smaller than the dithering threshold of the adjacent print position 800, the dithering threshold of the adjacent print position 800 decreases, rather than increases, due to the change, and thus the possibility that ink is ejected to print an ink dot on the adjacent print position 800 decreases. When the dithering thresholds are changed, the dithering threshold of the compensation position 600 decreases from V22 to V12, and the dithering threshold of the adjacent print position 800 increases from V12 to V22, as illustrated in Figure 8. Accordingly, the possibility ink is ejected to print an ink dot on the adjacent print position 800 increases, thereby compensating for the compensation position 600.

The adjacent print position of which the dithering thresholds are changed may be arbitrarily chosen from six adjacent print positions.

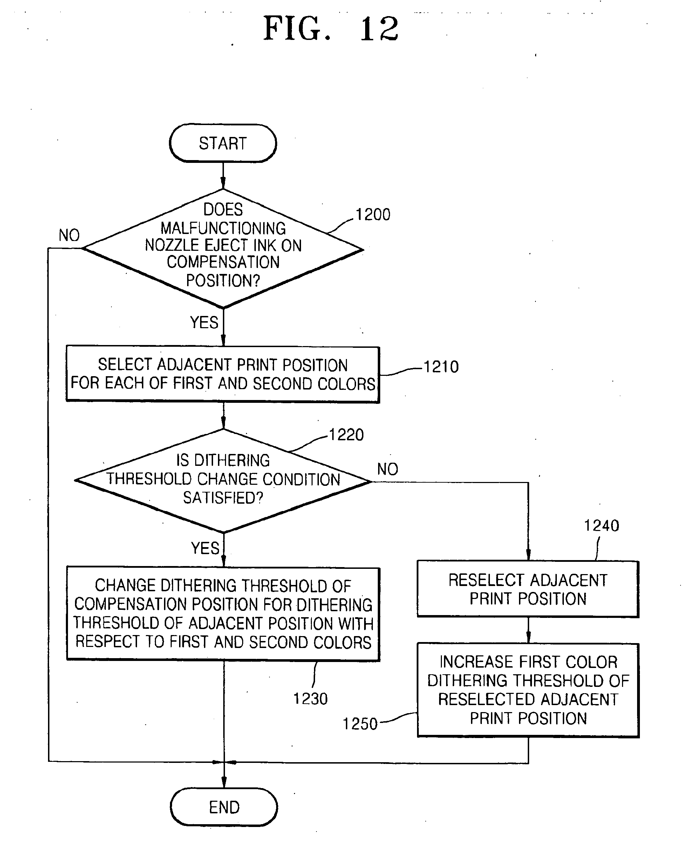

Figure 9 is a block diagram illustrating a configuration of the threshold adjusting unit 510 according to an exemplary embodiment of the present invention. The threshold adjusting unit 510 includes an ejection determining unit 900, a position selecting unit 910, a condition confirming unit 920, a threshold changing unit 930, and a threshold increase unit 940. The operation of the threshold adjusting unit 510 will be described in conjunction with a flowchart of an exemplary method of compensating for a manufacturing nozzle illustrated in Figure 12.

Hereinafter, a first color is a color printed on a print medium by a malfunctioning nozzle detected by malfunctioning nozzle detecting unit 132. For example, when four nozzles respectively print ink dots of four colors which is cyan (C), magenta (M), yellow (Y), and black (K) on a single print position, a color printed by a malfunctioning nozzle among four colors is the first color. The ejection determining unit 900 compares image data of the first color corresponding to a compensation position with a dithering threshold of the first color, and determines whether or not the malfunctioning nozzle prints an ink dot on the compensation position in operation 1200. As a result, when the malfunctioning nozzle has to print an ink dot on the compensation position, the malfunctioning nozzle is compensated for through the adjustment of the dithering threshold, as described below.

The position selecting unit 910 selects one of first color adjacent print positions to the compensation position for the first color and one of second color adjacent print positions to the compensation position for the second color in operation 1210. The position selecting unit 910 may arbitrarily select each of the first and second color adjacent print positions to the compensation position for the first and second color.

The condition confirming unit 920 confirms whether or not a first color dithering threshold of the compensation position is greater than a first color dithering threshold of the first color adjacent print position, and whether or not a second color dithering threshold of the compensation position is greater than a second color dithering threshold of the second color adjacent print position in operation 1220. As a result, when both conditions are satisfied, the first color dithering threshold of the compensation position is changed with the first color dithering threshold of the first color adjacent print position, and the second color dithering threshold of the compensation position is changed with the second color dithering threshold of the second color adjacent print position in operation 1230.

Because of the change of the first and second dithering thresholds, the possibilities that the first color, which cannot be normally printed on the compensation position due to the malfunctioning nozzle, is printed on the first color adjacent print position, and that the second color is printed on the compensation position increase. Therefore, the degradation of print quality due to the malfunctioning nozzle can be reduced.

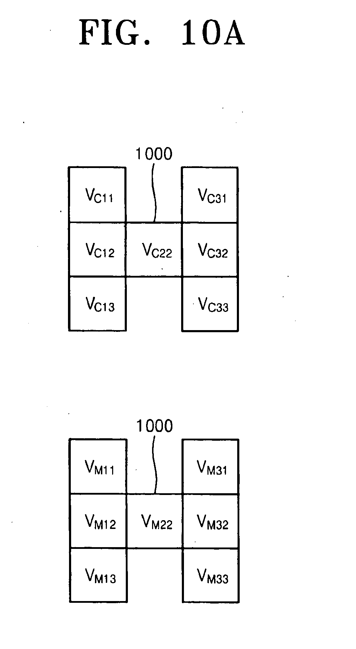

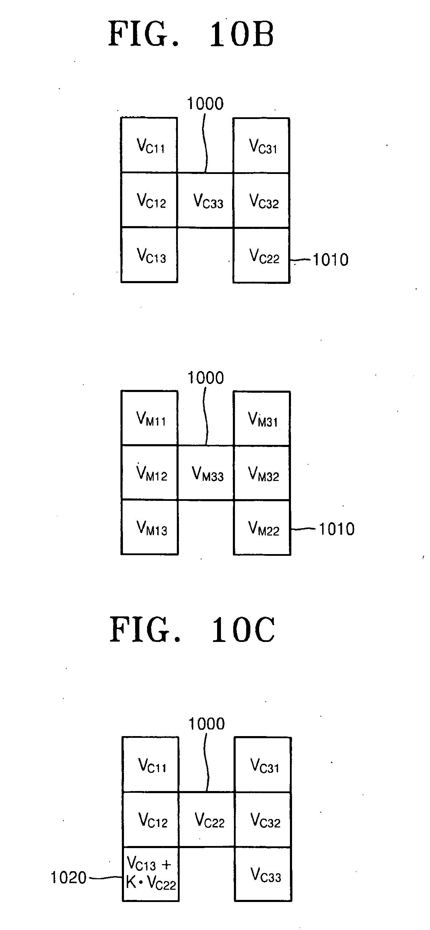

Figure 10A illustrates dithering thresholds mapped on compensation positions and adjacent print positions for cyan (C) and magenta (M) colors. VC22 denotes a dithering threshold mapped on the compensation position 1000 for the cyan (C) color, and VM22 denotes a dithering threshold mapped on the compensation position 1000 for the magenta (M) color. In addition, the cyan (C) is a first color printed by a malfunctioning nozzle and the magenta (M) is a second color. Figure 10B illustrates dithering thresholds when the threshold changing unit 930 changes dithering thresholds of Figure 10A according to operation 1230 of Figure 12. Referring to Figure 10B, the threshold exchanging unit 930 changes a dithering threshold of the compensation position 1000 with a dithering threshold of an arbitrarily chosen adjacent print position 1010 of the cyan (C) color, and changes a dithering threshold of the compensation position 1000 with a dithering threshold of an arbitrarily chosen adjacent print position 1010 of the magenta (M) color.

As a result of the confirmation in operation 1220, when any one of the above-described two conditions is not satisfied, the position selecting unit 910 selects one of adjacent print positions to the compensation position 1000 in operation 1240. The threshold increase unit 940 increases a first color dithering threshold of the selected adjacent print position in operation 1250. The position selecting unit 910 may arbitrarily select one of the adjacent print positions. The threshold increase unit 940 may increase the first color dithering threshold of the selected adjacent print position using equation 1.

Figure 10C illustrates dithering thresholds when the threshold increase unit 940 increases a first color dithering threshold of the cyan (C) color according to operation 1250. Referring to Figure 10C, the threshold increase unit 940 changes a first dithering threshold of an arbitrarily chosen adjacent print position 1020 of the cyan (C) color with the dithering threshold of the compensation position 1000, and then increases the dithering threshold of the adjacent print position 1020 using equation 1.

The present invention can also be embodied as computer program codes stored in a computer readable recording medium. The computer readable recording medium is any data storage device that can store data which can be thereafter read by computer system. Examples of the computer readable recording medium include read-only memory (ROM), random-access memory (ROM), CD-ROMs, magnetic tapes, floppy disks, optical data storage devices, and carrier waves (such as data transmission through the internet).

As described above, the exemplary embodiments showing a method and apparatus for compensating for a malfunctioning nozzle in an inkjet image forming apparatus adjusts a dithering threshold of a print position of the malfunctioning nozzle and a dithering threshold of an adjacent print position, and thus performs a halftoning transaction and prints an image. Accordingly, the degradation of print quality such as a visible white band can be prevented or reduced and the lifetime of the printhead can be lengthened.

While the present invention has been particularly shown and described with reference to exemplary embodiments thereof, it will be understood by those of ordinary skill in the art that various changes in form and details may be made therein without departing from the scope of the present invention as defined by the following claims. For instance, although the printheads are described above with reference to piezoelectric or heater ink ejection type printheads, other types may be readily apparent and the invention is not limited thereto.

**Claims**

1. A method of compensating for a malfunctioning nozzle in an inkjet image forming apparatus, in which an ink dot is printed at a print position if a value of image data for the print position is less than a dithering threshold of the print position, the method comprising:

   detecting a malfunctioning nozzle among a plurality of nozzles installed in the inkjet image forming apparatus;
   increasing a dithering threshold of a first print position adjacent to a compensation position, wherein the compensation position corresponds to the print position of the malfunctioning nozzle; and
   printing an ink dot at the first print position, if a value of image data for the first print position is less than the increased dithering threshold of the first print position.

2. The method of claim 1, wherein the increasing the dithering threshold comprises increasing the first print position's dithering threshold using the following equation:

$$V'adjacent = Vadjacent + (k \times Vdefect)$$

   where Vadjacent is a dithering threshold of the first print position, Vdefect is a dithering threshold of the compensation position, V'adjacent is an increased dithering threshold of the first print position, and k is a constant.

3. The method of claim 1, wherein, the increasing of the dithering threshold comprises adjusting the dithering threshold of the compensation position to correspond with the first print position's dithering threshold.

4. The method of claim 1, further comprising:

   determining if the dithering threshold of the compensation position is smaller than the dithering threshold of the first print position;
   wherein the increasing the dithering threshold comprises;
   when the dithering threshold of the compensation position is smaller than the dithering threshold of the first print position, increasing the dithering threshold of the first print position using the following equation:

$$\text{V'adjacent} = \text{Vadjacent} + (\text{k} \times \text{Vdefect})$$

where Vadjacent is a dithering threshold of the first print position, Vdefect is a dithering threshold of the compensation position, V'adjacent is an increased dithering threshold of the first print position, and k is a constant, and when the dithering threshold of the compensation position is greater than the dithering threshold of the first print position, adjusting the dithering threshold of the compensation position to correspond to the dithering threshold of the first print position.

5. The method of claim 1, wherein the increasing of the dithering threshold comprises:

   selecting a non-malfunctioning nozzle among a group of nozzles adjacent to the malfunctioning nozzle; and increasing a dithering threshold of a print position printed by the non-malfunctioning nozzle.

6. A method of compensating for a malfunctioning nozzle in an inkjet image forming apparatus, the method comprising:

   determining a compensation position corresponding to a print position of a malfunctioning nozzle;
   increasing a first color dithering threshold of an first print position adjacent to a compensation position; and
   increasing a second color dithering threshold of the compensation position.

7. The method of claim 6, wherein the malfunctioning nozzle is arranged for printing the first color and the first and second colors are different from one another.

8. The method of claim 6, further comprising:

   determining the first color dithering threshold of the compensation position;
   when the first color dithering threshold of the compensation position is determined to be smaller than the first color dithering threshold of the first print position, the increasing of the first color dithering threshold comprises increasing the first color dithering threshold of the adjacent print position using the following equation:

$$\text{V'adjacent} = \text{Vadjacent} + (\text{k} \times \text{Vdefect})$$

   where Vadjacent is a first dithering threshold of the adjacent print position, Vdefect is a first dithering threshold of the compensation position, V'adjacent is an increased first dithering threshold of the adjacent print position, and k is a constant, and
   when the first color dithering threshold of the compensation position is determined to be greater than the first color dithering threshold of the first print position, the first color dithering threshold of the compensation position is adjusted to correspond with the first color dithering threshold of the first print position.

9. The method of claim 6, further comprising:

   determining a second color dithering threshold of a print position adjacent to the compensation position;
   wherein the increasing of the second color dithering threshold comprises adjusting the second color dithering threshold of the compensation position to correspond with the second color dithering threshold of the print position when it is determined that a second color dithering threshold of the print position is greater than a second color dithering threshold of the compensation position.

10. A malfunctioning nozzle compensating apparatus for use in an inkjet image forming apparatus, in which an ink dot is printed at a print position if a value of image data for the print position is less than a dithering threshold of the print position, the compensating apparatus comprising:

    detecting means for detecting a malfunctioning nozzle among a plurality of nozzles installed in an inkjet image forming apparatus;

means for increasing a dithering threshold of an first print position adjacent to a compensation position, wherein said compensation position corresponds to a print position of a detected malfunctioning nozzle; and controlling means arranged to control one of the plurality of nozzles to print an ink dot at the first print position, if a value of image data for the first print position is less than the increased dithering threshold of the first print position.

**11.** The apparatus of claim 10, wherein the means for increasing the dither threshold is arranged to increase the dithering threshold of the first print position using the following equation:

$$V'adjacent = Vadjacent + ( k \ x \ Vdefect )$$

where Vadjacent is a dithering threshold of the first print position, Vdefect is a dithering threshold of the compensation position, V'adjacent is an increased dithering threshold of the first print position, and k is a constant.

**12.** The apparatus of claim 10, wherein the means for increasing the dither threshold is arranged to adjust the dithering threshold of the compensation position to correspond with the dithering threshold of the first print position.

**13.** The apparatus of claim 10, further comprising:

means for comparing a dithering threshold of the compensation position with the dithering threshold of the first print position,
wherein, when the dithering threshold of the compensation position is smaller than the dithering threshold of the first print position, the means for increasing the dither threshold is arranged to increase the dithering threshold of the first print position using the following equation,

$$V'adjacent = Vadjacent + ( k \ x \ Vdefect )$$

where Vadjacent is a dithering threshold of the first print position, Vdefect is a dithering threshold of the compensation position, V'adjacent is an increased dithering threshold of the first print position, and k is a constant, and wherein, when the dithering threshold of the compensation position is greater than the dithering threshold of the first print position, the means for increasing the dither threshold is arranged to adjust the dithering threshold of the compensation position to correspond with the dithering threshold of the first print position.

**14.** The apparatus of claim 10, wherein the malfunctioning nozzle is arranged for printing a first color, the apparatus further comprising:

means for comparing a second color dithering threshold of the compensation position with a second color dithering threshold of the first print position, the second color being different from the first color, wherein, when the second color dithering threshold of the first print position is greater than the second color dithering threshold of the compensation position, the apparatus is arranged to adjust the second color dithering threshold of the first print position to correspond with the second color dithering threshold of the compensation position, wherein a non-malfunctioning nozzle is arranged to print the second color at the print position of the malfunctioning nozzle.

**15.** A computer-readable recording medium having recorded thereon instructions for implementing a method according to any of claims 1 to 9.

**Patentansprüche**

**1.** Verfahren zum Kompensieren einer fehlerhaft arbeitenden Düse in einer Tintenstrahl-Bilderzeugungsvorrichtung, bei dem ein Tintenpunkt an einer Druckposition gedruckt wird, sofern ein Bilddatenwert für die Druckposition kleiner ist als ein Dither-Schwellenwert der Druckposition, wobei das Verfahren umfasst:

Erfassen einer fehlerhaft arbeitenden Düse aus einer Vielzahl von Düsen, die in einer Tintenstrahl-Bilderzeugungsvorrichtung installiert sind;
Erhöhen eines Dither-Schwellenwertes einer ersten Druckposition benachbart zu einer Kompensationsposition, wobei die Kompensationsposition der Druckposition der fehlerhaft arbeitenden Düse entspricht; und
Drucken eines Tintenpunktes an der ersten Druckposition, sofern ein Bilddatenwert für die erste Druckposition geringer ist als der erhöhte Dither-Schwellenwert der ersten Druckposition.

2. Verfahren nach Anspruch 1, bei dem das Erhöhen des Dither-Schwellenwertes das Erhöhen des Dither-Schwellenwertes der ersten Druckposition mit Hilfe folgender Gleichung beinhaltet:

$$V' \text{ benachbart} = V \text{ benachbart} + (k \times V \text{ defekt})$$

wobei V benachbart ein Dither-Schwellenwert der ersten Druckposition ist, V defekt ein Dither-Schwellenwert der Kompensationsposition ist, V' benachbart ein erhöhter Schwellenwert der ersten Druckposition ist und k eine Konstante ist.

3. Verfahren nach Anspruch 1, bei dem das Erhöhen des Dither-Schwellenwertes das Einstellen des Dither-Schwellenwertes der Kompensationsposition umfasst, so dass dieser dem Dither-Schwellenwert der ersten Druckposition entspricht.

4. Verfahren nach Anspruch 1, weiterhin enthaltend:

Bestimmen, ob der Dither-Schwellenwert der Kompensationsposition geringer ist als der Dither-Schwellenwert der ersten Druckposition;
wobei das Erhöhen des Dither-Schwellenwertes umfasst:

sofern der Dither-Schwellenwert der Kompensationsposition geringer ist als der Dither-Schwellenwert der ersten Druckposition, des Erhöhen des Dither-Schwellenwertes der ersten Position mit Hilfe der folgenden Gleichung:

$$V' \text{ benachbart} = V \text{ benachbart} + (k \times V \text{ defekt})$$

wobei V benachbart ein Dither-Schwellenwert der ersten Position ist, V defekt ein Dither-Schwellenwert der Kompensationsposition ist, V' benachbart ein erhöhter Dither-Schwellenwert der ersten Druckposition ist und k eine konstante ist, und
sofern der Dither-Schwellenwert der Kompensationsposition größer ist als der Dither-Schwellenwert der ersten Druckposition, das Einstellen des Dither-Schwellenwertes der Kompensationsposition, so dass er dem Dither-Schwellenwert der ersten Druckposition entspricht.

5. Verfahren nach Anspruch 1, bei dem das Erhöhen des Dither-Schwellenwertes umfasst:

Wählen einer nicht fehlerhaft arbeitenden Düse aus einer Gruppe von Düsen, benachbart zur fehlerhaft arbeitenden Düse; und
Erhöhen eines Dither-Schwellenwertes einer Druckposition, die von der nicht fehlerhaft arbeitenden Düse gedruckt wird.

6. Verfahren zum Kompensieren einer fehlerhaft arbeitenden Düse in einer Tintenstrahl-Bilderzeugungsvorrichtung, wobei das Verfahren umfasst:

Bestimmen einer Kompensationsposition entsprechend einer Druckposition einer fehlerhaft arbeitenden Düse;
Erhöhen eines ersten Farbdither-Schwellenwertes einer ersten Druckposition benachbart einer Kompensationsposition; und
Erhöhen eines zweiten Farbdither-Schwellenwertes der Kompensationsposition.

**7.** Verfahren nach Anspruch 6, bei dem die fehlerhaft arbeitende Düse für das Drucken der ersten Farbe eingerichtet ist und sich die erste sowie die zweite Farbe voneinander unterscheiden.

**8.** Verfahren nach Anspruch 6, weiterhin umfassend:

Bestimmen des ersten Farbdither-Schwellenwertes der Kompensationsposition;
wobei, wenn der erste Farbdither-Schwellenwert der Kompensationsposition als kleiner als der erste Farbdither-Schwellenwert der ersten Druckposition bestimmt wird, das Erhöhen des ersten Farbdither-Schwellenwertes das Erhöhen des ersten Farbdither-Schwellenwertes der benachbarten Druckposition mit Hilfe der folgenden Gleichung beinhaltet:

$$V' \text{ benachbart} = V \text{ benachbart} + (k \times V \text{ defekt})$$

wobei V benachbart ein erster Dither-Schwellenwert der benachbarten Druckposition ist V defekt ein erster Dither-Schwellenwert der Kompensationsposition ist, V' benachbart ein erhöhter erster Dither-Schwellenwert der benachbarten Druckposition ist und k eine Konstante ist, und
wobei, wenn der erste Farbdither-Schwellenwert der Kompensationsposition als größer als der erste Farbdither-Schwellenwert der ersten Druckposition ermittelt wird, der erste Farbdither-Schwellenwert der Kompensationsposition so eingestellt wird, dass er dem ersten Farbdither-Schwellenwert der ersten Druckposition entspricht.

**9.** Verfahren nach Anspruch 6, weiterhin umfassend:

Bestimmen eines zweiten Farbdither-Schwellenwertes einer Druckposition benachbart der Kompensationsposition;
wobei das Erhöhen des zweiten Farbdither-Schwellenwertes das Einstellen des zweiten Farbdither-Schwellenwertes der Kompensationsposition umfasst, so dass er dem zweiten Farbdither-Schwellenwert der Druckposition entspricht, wenn Bestimmt wird, dass ein zweiter Farbdither-Schwellenwert der Druckposition größer ist als ein zweiter Farbdither-Schwellenwert der Kompensationsposition.

**10.** Vorrichtung zum Kompensieren einer fehlerhaft arbeitenden Düse für die Verwendung in einer Tintenstrahl-Bilderzeugungsvorrichtung, wobei ein Tintenpunkt an einer Druckposition gedruckt wird, sofern ein Bilddatenwert für die Druckposition geringer ist als ein Dither-Schwellenwert der Druckposition, wobei die Kompensationsvorrichtung enthält:

eine Erfassungseinrichtung, die eine fehlerhaft arbeitende Düse aus einer Vielzahl von Düsen erfasst, die in einer Tintenstrahl-Bilderzeugungsvorrichtung installiert sind;
eine Einrichtung, die einen Dither-Schwellenwert einer ersten Druckposition benachbart einer Kompensationsposition erhöht, wobei die Kompensationsposition einer Druckposition einer erfassten fehlerhaft arbeitenden Düse entspricht; und
eine Steuereinrichtung, die so eingerichtet ist, dass sie eine aus der Vielzahl von Düsen steuert, um einen Tintenpunkt an der ersten Druckposition zu drucken, sofern ein Bilddatenwert für die erste Druckposition geringer ist als der erhöhte Dither-Schwellenwert der ersten Druckposition.

**11.** Vorrichtung nach Anspruch 10, bei der die Einrichtung, die den Dither-Schwellenwert erhöht, so beschaffen ist, dass sie den Dither-Schwellenwert der ersten Druckposition mit Hilfe folgender Gleichung erhöht:

$$V' \text{ benachbart} = V \text{ benachbart} + (k \times V \text{ defekt})$$

wobei V benachbart ein Dither-Schwellenwert der ersten Druckposition ist, V defekt ein Dither-Schwellenwert der Kompensationsposition ist, V' benachbart ein erhöhter Dither-Schwellenwert der ersten Druckposition ist und k eine Kostante ist.

**12.** Vorrichtung nach Anspruch 10, bei der die Einrichtung, die den Dither-Schwellenwert erhöht, so beschaffen ist, dass sie den Dither-Schwellenwert der Kompensationsposition so einstellt, dass dieser dem Dither-Schwellenwert der ersten Position entspricht.

**13.** Vorrichtung nach Anspruch 10, weiterhin enthaltend:

eine Einrichtung, die einen Dither-Schwellenwert der Kompensationsposition mit dem Dither-Schwellenwert der ersten Druckposition vergleicht;
wobei, sofern der Dither-Schwellenwert der Kompensationsposition geringer ist als der Dither-Schwellenwert der ersten Druckposition, die Einrichtung zum Erhöhen des Dither-Schwellenwertes so beschaffen ist, dass sie den Dither-Schwellenwert der ersten Position mit Hilfe der folgenden Gleichung erhöht:

$$V' \text{ benachbart} = V \text{ benachbart} + (k \times V \text{ defekt})$$

wobei V benachbart ein Dither-Schwellenwert der ersten Druckposition ist, V defekt ein Dither-Schwellenwert der Kompensationsposition ist, V' benachbart ein erhöhter Dither-Schwellenwert der ersten Druckposition ist und k eine Konstante ist, und
sofern der Dither-Schwellenwert der Kompensationsposition größer ist als der Dither-Schwellenwert der ersten Druckposition, die Einrichtung zum Erhöhen des Dither-Schwellenwertes so beschaffen ist, dass sie den Dither-Schwellenwert der Kompensationsposition so einstellt, dass er dem Dither-Schwellenwert der ersten Druckposition entspricht.

**14.** Vorrichtung nach Anspruch 10, bei der die fehlerhaft arbeitende Düse zum Drucken der ersten Farbe eingerichtet ist, wobei die Vorrichtung weiterhin enthält:

eine Einrichtung, die einen zweiten Farbdither-Schwellenwert der Kompensationsposition mit einem zweiten Farbdither-Schwellenwert der ersten Druckposition vergleicht, wobei sich die zweite Farbe von der ersten Farbe unterscheidet,
wobei, wenn der zweite Farbdither-Schwellenwert der ersten Druckposition größer ist als der zweite Farbdither-Schwellenwert der Kompensationsposition, die Vorrichtung so beschaffen ist, dass sie den zweiten Farbdither-Schwellenwert der ersten Druckposition derart einstellt, dass er dem zweiten Farbdither-Schwellenwert der Kompensationsposition entspricht,
wobei eine nicht fehlerhaft arbeitende Düse eingerichtet ist, um die zweite Farbe an der Druckposition der fehlerhaft arbeitenden Düse zu drucken.

**15.** Computerlesbares Aufzeichnungsmedium, auf dem sich Befehle für die Anwendung eines Verfahrens gemäß einem der Ansprüche 1 bis 9 befinden.

**Revendications**

**1.** Procédé pour compenser une buse présentant un défaut de fonctionnement dans un dispositif de formation d'images à jet d'encre, dans lequel un point d'encre est imprimé à une position d'impression si une valeur de données d'image pour la position d'impression est inférieure à un seuil de tramage de la position d'impression, le procédé comportant les étapes consistant à :

détecter une buse présentant un défaut de fonctionnement parmi une pluralité de buses installées dans le dispositif de formation d'images à jet d'encre,

augmenter un seuil de tramage d'une première position d'impression adjacente à une position de compensation, la position de compensation correspondant à la position d'impression de la buse présentant un défaut de fonctionnement, et

imprimer un point d'encre à la première position d'impression, si une valeur de données d'image pour la première position d'impression est inférieure au seuil de tramage augmenté de la première position d'impression.

2. Procédé selon la revendication 1, dans lequel l'augmentation du seuil de tramage comporte l'augmentation du seuil de tramage de la première position d'impression en utilisant l'équation suivants :

$$V'adjacent = Vadjacent + (k \times Vdefect)$$

où Vadjacent est un seuil de tramage de la première position d'impression, Vdefect est un seuil de tramage de la position de compensation, V'adjacent est un seuil de tramage augmenté de la première position d'impression, et k est une constante.

3. Procédé selon la revendication 1, dans lequel l'augmentation du seuil de tramage comporte le réglage du seuil de tramage de la position de compensation pour qu'il corresponde au seuil de tramage de la première position d'impression.

4. Procédé selon la revendication 1, comportant en outre les étapes consistant à :

déterminer si le seuil de tramage de la position de compensation est inférieur au seuil de tramage de la première position d'impression,

dans lequel l'augmentation du seuil de tramage comporte,

lorsque le seuil de tramage de la position de compensation est inférieur au seuil de tramage de la première position d'impression, d'augmenter le seuil de tramage de la première position d'impression en utilisant l'équation suivants :

$$V'adjacent = Vadjacent + (k \times Vdefect)$$

où Vadjacent est un seuil de tramage de la première position d'impression, Vdefect est un seuil de tramage de la position de compensation, V'adjacent est un seuil de tramage augmenté de la première position d'impression, et k est une constante, et

lorsque le seuil de tramage de la position de compensation est supérieur au seuil de tramage de la première position d'impression, régler le seuil de tramage de la position de compensation pour qu'il corresponde au seuil de tramage de la première position d'impression.

5. Procédé selon la revendication 1, dans lequel l'augmentation du seuil de tramage comporte les étapes consistant à :

sélectionner une buse présentant un défaut de fonctionnement parmi un groupe de buses adjacentes à la buse présentant un défaut de fonctionnement, et

augmenter un seuil de tramage d'une position d'impression imprimée par la buse ne présentant pas de défaut de fonctionnement.

6. Procédé pour compenser une buse présentant un défaut de fonctionnement dans un dispositif de formation d'images à jet d'encre, le procédé comportant les étapes consistant à :

déterminer une position de compensation correspondant à une position d'impression d'une buse présentant un défaut de fonctionnement,

augmenter un seuil de tramage d'une première couleur d'une première position d'impression adjacente à une position de compensation, et

augmenter un seuil de tramage d'une seconde couleur de la position de compensation.

**7.** Procédé selon la revendication 6, dans lequel la buse présentant un défaut de fonctionnement est conçue pour imprimer la première couleur et les première et seconde couleurs sont différentes l'une de l'autre.

**8.** Procédé selon la revendication 6, comportant en outre l'étape consistant à :

déterminer le seuil de tramage de la première couleur de la position de compensation,
lorsque le seuil de tramage de la première couleur de la position de compensation est déterminé comme étant inférieur au seuil de tramage de la première couleur de la première position d'impression, l'augmentation du seuil de tramage de la première couleur comporte l'augmentation du seuil de tramage de la première couleur de la position d'impression adjacente en utilisant l'équation suivants :

$$V'\text{adjacent} = V\text{adjacent} + (k \times V\text{defect})$$

où Vadjacent est un premier seuil de tramage de la position d'impression adjacente, Vdefect est un premier seuil de tramage de la position de compensation, V'adjacent est un premier seuil de tramage augmenté de la position d'impression adjacente, et k est une constante, et
lorsque le seuil de tramage de la première couleur de la position de compensation est déterminé comme étant supérieur au seuil de tramage de la première couleur de la première position d'impression, le seuil de tramage de la première couleur de la position de compensation est réglé pour correspondre au seuil de tramage de la première couleur de la première position d'impression.

**9.** Procédé selon la revendication 6, comportant en outre l'étape consistant à :

déterminer un seuil de tramage de la seconde couleur d'une position d'impression adjacente à la position de compensation,
dans lequel l'augmentation du seuil de tramage de la seconde couleur comporte le réglage du seuil de tramage de la seconde couleur de la position de compensation pour qu'il corresponde au seuil de tramage de la seconde couleur de la position d'impression lorsqu'il est déterminé qu'un seuil de tramage de la seconde couleur de la position d'impression est supérieur au seuil de tramage de la seconde couleur de la position de compensation.

**10.** Dispositif de compensation d'une buse présentant un défaut de fonctionnement à utiliser dans un dispositif de formation d'images à jet d'encre, dans lequel un point d'encre est imprimé à une position d'impression si une valeur de données d'image pour la position d'impression est inférieure à un seuil de tramage de la position d'impression, le dispositif de compensation comportant :

des moyens de détection pour détecter une buse présentant un défaut de fonctionnement parmi une pluralité de buses installées dans le dispositif de formation d'images à jet d'encre,
des moyens pour augmenter un seuil de tramage d'une première position d'impression adjacente à une position de compensation, la position de compensation correspondant à une position d'impression d'une buse présentant un défaut de fonctionnement détectée, et
des moyens de commande conçus pour commander une buse parmi la pluralité de buses afin d'imprimer un point d'encre à la première position d'impression, si une valeur de données d'image pour la première position d'impression est inférieure au seuil de tramage augmenté de la première position d'impression.

**11.** Dispositif selon la revendication 10, dans lequel les moyens pour augmenter le seuil de tramage sont conçus pour augmenter le seuil de tramage de la première position d'impression en utilisant l'équation suivante :

$$V'\text{adjacent} = V\text{adjacent} + (k \times V\text{defect})$$

où Vadjacent est un seuil de tramage de la première position d'impression, Vdefect est un seuil de tramage de la position de compensation, V'adjacent est un seuil de tramage augmenté de la première position d'impression, et k est une constante.

**12.** Dispositif selon la revendication 10, dans lequel les moyens pour augmenter du seuil de tramage sont conçus pour régler le seuil de tramage de la position de compensation afin qu'il corresponde au seuil de tramage de la première position d'impression.

13. Dispositif selon la revendication 10, comportant en outre :

des moyens pour comparer un seuil de tramage de la position de compensation au seuil de tramage de la première position d'impression,
dans lequel, lorsque le seuil de tramage de la position de compensation est inférieur au seuil de tramage de la première position d'impression, les moyens pour augmenter le seuil de tramage sont conçus pour augmenter le seuil de tramage de la première position d'impression en utilisant l'équation suivante :

$$V'adjacent = Vadjacent + (k \times Vdefect)$$

où Vadjacent est un seuil de tramage de la première position d'impression, Vdefect est un seuil de tramage de la position de compensation, V'adjacent est un seuil de tramage augmenté de la première position d'impression, et k est une constante, et
dans lequel, lorsque le seuil de tramage de la position de compensation est supérieur au seuil de tramage de la première position d'impression, les moyens pour augmenter le seuil de tramage sont conçus pour régler le seuil de tramage de la position de compensation afin qu'il corresponde au seuil de tramage de la première position d'impression.

14. Dispositif selon la revendication 10, dans lequel la buse présentant un défaut de fonctionnement est conçue pour imprimer une première couleur, le dispositif comportant en outre :

des moyens pour comparer un seuil de tramage de la seconde couleur de la position de compensation au seuil de tramage de la seconde couleur de la première position d'impression, la seconde couleur étant différente de la première couleur,
dans lequel, lorsque le seuil de tramage de la seconde couleur de la première position de compensation est supérieur au seuil de tramage de la seconde couleur de la position de compensation, le dispositif est conçu pour régler le seuil de tramage de la seconde couleur de la première position d'impression afin qu'il corresponde au seuil de tramage de la seconde couleur de la position de compensation,
dans lequel une buse présentant un défaut de fonctionnement est conçue pour imprimer la seconde couleur à la position d'impression de la buse présentant un défaut de fonctionnement.

15. Support d'enregistrement lisible par ordinateur ayant des instructions enregistrées sur celui-ci pour mettre en oeuvre un procédé selon l'une quelconque des revendications 1 à 9.

# FIG. 1 (PRIOR ART)

# FIG. 2A (PRIOR ART)

# FIG. 2B (PRIOR ART)

# FIG. 2C (PRIOR ART)

# FIG. 2D (PRIOR ART)

# FIG. 3

FIG. 4

# FIG. 5

500

MALFUNCTIONING NOZZLE
COMPENSATING APPARATUS

510        520

| MALFUNCTIONING NOZZLE DETECTING UNIT | → | THRESHOLD ADJUSTING UNIT | → | DITHERING PERFORMING UNIT |

132

DITHERING MATRIX

# FIG. 6

600

| $V_{11}$ |          | $V_{31}$ |
| $V_{12}$ | $V_{22}$ | $V_{32}$ |
| $V_{13}$ |          | $V_{33}$ |

# FIG. 7

| | | | |
|---|---|---|---|
| $V_{11}$ | | $V_{31}$ | |
| $V_{12}$ | $V_{22}$ | $V_{32} + K \cdot V_{22}$ | |
| $V_{13}$ | | $V_{33}$ | |

600

700

# FIG. 8

| | | |
|---|---|---|
| $V_{11}$ | | $V_{31}$ |
| $V_{22}$ | $V_{12}$ | $V_{32}$ |
| $V_{13}$ | | $V_{33}$ |

600

800

# FIG. 9

510

900 — EJECTION DETERMINING UNIT

910 — POSITION SELECTING UNIT

930 — THRESHOLD CHANGING UNIT

DITHERING MATRIX

920 — CONDITION CONFIRMING UNIT

940 — THRESHOLD INCREASE UNIT

# FIG. 10A

1000

| $V_{C11}$ | | $V_{C31}$ |
|---|---|---|
| $V_{C12}$ | $V_{C22}$ | $V_{C32}$ |
| $V_{C13}$ | | $V_{C33}$ |

1000

| $V_{M11}$ | | $V_{M31}$ |
|---|---|---|
| $V_{M12}$ | $V_{M22}$ | $V_{M32}$ |
| $V_{M13}$ | | $V_{M33}$ |

# FIG. 10B

1000

| $V_{C11}$ | | $V_{C31}$ |
| $V_{C12}$ | $V_{C33}$ | $V_{C32}$ |
| $V_{C13}$ | | $V_{C22}$ —1010 |

1000

| $V_{M11}$ | | $V_{M31}$ |
| $V_{M12}$ | $V_{M33}$ | $V_{M32}$ |
| $V_{M13}$ | | $V_{M22}$ —1010 |

# FIG. 10C

1000

| $V_{C11}$ | | $V_{C31}$ |
| $V_{C12}$ | $V_{C22}$ | $V_{C32}$ |
| 1020— $V_{C13} + K \cdot V_{C22}$ | | $V_{C33}$ |

# FIG. 11

```
        ┌─────────────┐
        │    START    │
        └─────────────┘
               │
               ▼
┌──────────────────────────────┐
│ DETECT MALFUNCTIONING NOZZLE │────1100
└──────────────────────────────┘
               │
               ▼
┌──────────────────────────────┐
│   ADJUST DITHERING THRESHOLD OF    │
│     COMPENSATION POSITION OF       │────1110
│ MALFUNCTIONING NOZZLE OR DITHERING │
│    THRESHOLD OF ADJACENT PRINT     │
│  POSITION TO COMPENSATION POSITION │
└──────────────────────────────┘
               │
               ▼
        ┌─────────────┐
        │     END     │
        └─────────────┘
```

# FIG. 12

```
              START
                │
                ▼
        ╱─────────────╲
       ╱    DOES        ╲        1200
  NO  ╱  MALFUNCTIONING  ╲
◄─────  NOZZLE EJECT INK ON
       ╲  COMPENSATION   ╱
        ╲  POSITION?    ╱
         ╲─────────────╱
                │
              YES│
                ▼
    ┌─────────────────────────────┐
    │  SELECT ADJACENT PRINT       │      1210
    │ POSITION FOR EACH OF FIRST   │
    │     AND SECOND COLORS        │
    └─────────────────────────────┘
                │
                ▼
        ╱─────────────╲      1220
       ╱ IS DITHERING  ╲
      ╱ THRESHOLD CHANGE╲   NO
      ╲    CONDITION    ╱────────────┐
       ╲  SATISFIED?   ╱              │
        ╲─────────────╱               │        1240
              │                       ▼
            YES│           ┌──────────────────────┐
              ▼            │  RESELECT ADJACENT    │
 ┌──────────────────────┐ │    PRINT POSITION     │
 │ CHANGE DITHERING      │ └──────────────────────┘
 │ THRESHOLD OF          │            │
 │ COMPENSATION POSITION │            ▼
 │ FOR DITHERING         │ ┌──────────────────────┐
 │ THRESHOLD OF ADJACENT │ │ INCREASE FIRST COLOR  │
 │ POSITION WITH RESPECT │ │ DITHERING THRESHOLD OF│
 │ TO FIRST AND SECOND   │ │ RESELECTED ADJACENT   │
 │ COLORS                │ │    PRINT POSITION     │
 └──────────────────────┘ └──────────────────────┘
              │       1230      1250
              ▼
            END
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5581284 A
- EP 1384592 A1